# EUROPEAN PATENT APPLICATION

(11) **EP 3 296 921 A1**
(43) Date of publication of application: **21.03.2018**
(21) Application number: 16791903.4
(22) Date of filing: 22.01.2016
(51) Int. Cl.: G06K 9/00

(54) **FINGERPRINT IDENTIFICATION MODULE**

(30) Priority: 08.05.2015 CN 201510233087
(71) Applicant: Microarray Microelectronics Corp., Ltd., Suzhou, Jiangsu 215000 (CN)
(72) Inventor: LI, Yangyuan, Jiangsu 215000 (CN); DING, Shaobo, Jiangsu 215000 (CN)
(74) Representative: dompatent von Kreisler Selting Werner - Partnerschaft von Patent- und Rechtsanwälten mbB
(86) International application number: PCT/CN2016/071701
(87) International publication number: WO 2016/180053

(57) **Abstract**

A fingerprint identification module, comprising: an electrical mechanism and a mechanics mechanism provided on the periphery of the electrical mechanism that is configured to disperse a pressure loaded on the electrical mechanism, wherein the mechanics mechanism includes an upper cover plate and a force transmission component with a hollowed-out middle portion, the upper cover plate being provided on the top of the force transmission component and forming an accommodation space together with the force transmission component; and the electrical mechanism includes a circuit board and a fingerprint identification chip, the circuit board including an extension portion and a connection portion, the fingerprint identification chip being provided in the accommodation space and being electrically connected to the connection portion via a conductor, a top end face of the fingerprint identification chip being fixedly connected to a bottom end face of the upper cover plate, and the horizontal height of a bottom end face of the connection portion being higher than that of a bottom end face of the mechanics mechanism. Compared to the prior art, the fingerprint identification module in the present invention employs a mechanics mechanism to disperse a pressured loaded on an electrical mechanism, which can protect the electrical mechanism during operation and can greatly improve the service life of the fingerprint identification module.

## Description

The present application claims the priority of Chinese patent application No. 201510233087.1 , titled "Fingerprint identification module" and filed on May 8, 2015, which is incorporated herein in its entirety by reference.

### TECHNICAL FIELD

The present invention relates to the technical field of fingerprint identification module manufacture and encapsulation.

### BACKGROUND

Since fingerprints are constant and unique, a user's identity can be identified accurately and reliably by identifying fingerprints. A fingerprint identification module is a device which acquires a fingerprint image of a user conveniently and rapidly through a fingerprint identification technology to identify the user's identity.

The fingerprint identification module disclosed in the prior art includes an electrical mechanism (the electrical mechanism includes a fingerprint identification chip and a circuit board) but is not provided with an independent mechanics mechanism. During manufacturing, the electrical mechanism is directly fixed between an upper cover plate and a lower cover plate. Since an upper surface and a lower surface of the electrical mechanism are fixedly connected to the upper cover plate and the lower cover plate respectively, during operation, a force applied by a finger of a user and pressing the fingerprint identification module is directly transferred to the electrical mechanism, which is easy to cause mechanical damage to the electrical mechanism or cause loosing of conductive materials between the components of the electrical mechanism and thus poor contact. All the above-described failures will directly affect the service life of the fingerprint identification module.

In view of the above problems, fingerprint identification module manufacturers have their own solutions. For example, Apple Inc. employs an avoidance method, which does not place a solder on the back surface of the fingerprint identification chip but connects the circuit board through wiring from the side of the chip; but this design renders high manufacture costs and low yield of the fingerprint identification module. The fingerprint module employed by Huawei Mate 7 is to provide a layer of foam below the fingerprint identification chip and to expand the area of the solder on the back surface of the chip. However, these two methods do not essentially change the pressure resistance of the chip. Thus, Huawei places the fingerprint module on the back surface of a mobile phone which does not frequently bear pressure. At the same time, due to a large size of the fingerprint module, it is not suitable for the industrial design of medium and small-sized mobile phones.

### SUMMARY

An object of the present invention is to provide a fingerprint identification module with a small volume and long service life.

In order to realize the above invention object, the present invention adopts the following technical solution.

A fingerprint identification module comprises: an electrical mechanism and a mechanics mechanism provided on the periphery of the electrical mechanism that is configured to disperse a pressure loaded on the electrical mechanism.

The mechanics mechanism includes an upper cover plate and a force transmission component with a hollowed-out middle portion, the upper cover plate being provided on the top of the force transmission component and forming an accommodation space together with the force transmission component.

The electrical mechanism includes a circuit board and a fingerprint identification chip, the circuit board including an extension portion and a connection portion, the fingerprint identification chip being provided in the accommodation space and being electrically connected to the connection portion via a conductor, a top end face of the fingerprint identification chip being fixedly connected to a bottom end face of the upper cover plate, and the horizontal height of a bottom end face of the connection portion being higher than that of a bottom end face of the mechanics mechanism.

As an improved technical solution of the present invention, an inner wall of the hollowed-out middle portion of the force transmission component is provided with a support arm, the support arm forms a step with a top end face of the force transmission component and divides the accommodation space into a first accommodation portion close to the top end face of the force transmission component and a second accommodation portion close to the bottom end face of the force transmission component, the upper cover plate is provided in the first accommodation portion, the fingerprint identification chip and the connection portion are provided in the second accommodation portion, and the bottom end face of the upper cover plate is fixedly connected to an upper surface of the support arm.

As a further improved technical solution of the present invention, the accommodation space is provided with an opening on the bottom, an inner wall of the hollowed-out middle portion of the force transmission component is provided with a support arm, the mechanics mechanism also includes a lower cover plate, the bottom end face of the upper cover plate is fixedly connected to an upper surface of the support arm, a top end face of the lower cover plate is fixedly connected to a lower surface of the support arm, and a gap is reserved between the connection portion and the lower cover plate.

As a further improved technical solution of the present invention, the support arm forms a step with the top end face and the bottom end face of the force transmission component respectively and divides the accommodation space into a first accommodation portion closer to the top end face of the force transmission component relative to the support arm, a third accommodation portion closer to the bottom end face of the force transmission component relative to the support arm and a second accommodation portion located between the first accommodation portion and the third accommodation portion, the upper cover plate is provided in the first accommodation portion, the lower cover plate is provided in the third accommodation portion, the fingerprint identification chip and the connection portion are provided in the second accommodation portion, and the upper cover plate and the lower cover plate enclose the second accommodation portion.

As a further improved technical solution of the present invention, the upper cover plate and the force transmission component are of an integral structure.

As a further improved technical solution of the present invention, the mechanics mechanism also includes a lower cover plate, a top end face of the lower cover plate is fixedly connected to the bottom end face of the mechanics mechanism, and the lower cover plate encloses the accommodation space.

As a further improved technical solution of the present invention, the mechanics mechanism also includes a reinforcement plate, the reinforcement plate is provided below the circuit board and with a hollowed-out middle portion, and the hollowed-out location corresponds to the location of the conductor on the back surface of the fingerprint identification chip.

As a further improved technical solution of the present invention, the mechanics mechanism also includes a base plate, and the base plate is provided between the fingerprint identification chip and the connection portion.

As a further improved technical solution of the present invention, an edge of the base plate extends into the mechanics mechanism.

As a further improved technical solution of the present invention, an edge of the connection portion of the circuit board extends into the mechanics mechanism.

Compared to the prior art, the technical effects of the present invention lie in that: the fingerprint identification module in the present invention is provided with a mechanics mechanism on the periphery of an electrical mechanism; during operation, the stress applied by a finger of a user is dispersed to various portions of the fingerprint identification module by the mechanics mechanism, and the electrical mechanism merely bears a very small pressure; and moreover, the bottom of the electrical mechanism has a gap, which provides an elastic deformation margin to the electrical mechanism, prevents the electrical mechanism colliding with other components after deformation by pressure, and thus can protect the electrical mechanism during operation and can significantly improve the service life of the fingerprint identification module.

### BRIEF DESCRIPTION OF THE DRAWINGS

Fig. 1 is a section view of a fingerprint identification module provided according to embodiment I of the present invention;
Fig. 2 is a section view of a fingerprint identification module provided according to embodiment II of the present invention;
Fig. 3 is a exploded view of a fingerprint identification module provided according to embodiment II of the present invention;
Fig. 4 is a section view of a fingerprint identification module provided according to embodiment III of the present invention;
Fig. 5 is a section view of a fingerprint identification module provided according to embodiment IV of the present invention;
Fig. 6 is a exploded view of an electrical mechanism and a reinforcement plate according to embodiment V of the present invention;
Fig. 7 is a section view of a fingerprint identification module in which the circuit board does not go beyond the accommodation space where the fingerprint identification module is located according to embodiment V of the present invention;
Fig. 8 is a section view of a fingerprint identification module in which the circuit board goes beyond the accommodation space where the fingerprint identification module is located according to embodiment V of the present invention;
Fig. 9 is a section view of a fingerprint identification module in which the circuit board goes beyond the accommodation space where the fingerprint identification module is located according to embodiment V of the present invention;
Fig. 10 is a section view of a fingerprint identification module in which neither the circuit board nor the base plate goes beyond the accommodation space where the fingerprint identification module is located according to embodiment VI of the present invention;
Fig. 11 is a section view of a fingerprint identification module in which the circuit board rather than the base plate goes beyond the accommodation space where the fingerprint identification module is located according to embodiment VI of the present invention;
Fig. 12 is a section view of a fingerprint identification module in which the base plate rather than the circuit board goes beyond the accommodation space where the fingerprint identification module is located according to embodiment VI of the present invention;
Fig. 13 is a section view of a fingerprint identification module in which both the circuit board and the base plate go beyond the accommodation space where the fingerprint identification module is located according to embodiment VI of the present invention.

### DETAILED DESCRIPTION

Hereinafter, the present invention will be described in detail in combination with the particular embodiments shown in the accompanying drawings. However, these embodiments do not limit the present invention, and the structure, method or function transformations made by those skilled in the art according to these embodiments are all contained in the protection scope of the present invention.

### Embodiment I

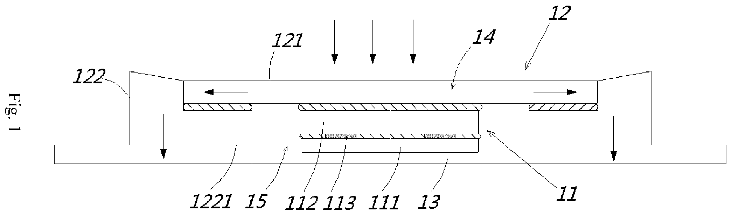

Fig. 1 shows a fingerprint identification module employing a TSV (Through Silicon Via) encapsulation technology. The TSV encapsulation technology is a prior art, which will not be described here. The fingerprint identification module includes: an electrical mechanism 11 and a mechanics mechanism 12 provided on the periphery of the electrical mechanism 11 that is configured to disperse a pressure loaded on the electrical mechanism 11.

The mechanics mechanism 12 includes an upper cover plate 121 and a force transmission component 122 with a hollowed-out middle portion. The upper cover plate 121 and the force transmission component 122 form an accommodation space. In this embodiment, the bottom of the accommodation space is provided with an opening which communicates with the hollowed-out middle portion.

The electrical mechanism 11 includes a circuit board 111 and a fingerprint identification chip 112. The fingerprint identification chip 112 is used for collecting a fingerprint image signal of a user. The circuit board 111 includes an extension portion (not shown in Fig. 1) and a connection portion provided in the accommodation space. The fingerprint identification chip 112 is provided in the accommodation space. A signal output pad thereof is located on the back surface and is electrically connected to a signal input pad on the front surface of the connection portion through a solder 113.

An inner wall of the hollowed-out middle portion of the force transmission component 122 is provided with a support arm 1221. The support arm1221 forms a step with a top end face of the force transmission component 122 and divides the accommodation space into a first accommodation portion 14 close to the top end face of the force transmission component 122 and a second accommodation portion 15 close to a bottom end face of the force transmission component 122. The upper cover plate 121 is provided in the first accommodation portion. The fingerprint identification chip 112 and the connection portion are provided in the second accommodation portion. A bottom end face of the upper cover plate 121 is fixedly connected to an upper surface of the support arm 1221 through glue.

A top end face of the fingerprint identification chip 112 is fixedly connected to the bottom end face of the upper cover plate 121 through glue. During operation, the stress applied by the pressing of a finger of a user is dispersed and guided to various parts of the fingerprint identification module through the mechanics mechanism 12, and thus the electrical mechanism 11 merely supports a very small pressure, which can reduce the mechanical damage possibility of the electrical mechanism 11. At the same time, the smaller a pressure loaded on the electrical mechanism 11, the smaller the deformation thereof during operation; and the solder 113 between the fingerprint identification chip 112 and the connection portion is not easy to fall off.

The horizontal height of a bottom end face of the connection portion is higher than that of the bottom end face of the force transmission component 122. That is, a gap 13 is reserved in the bottom of the connection portion. The gap 13 provides an elastic deformation margin for the electrical mechanism 11, prevents 11 touching other components after the electrical mechanism is deformed by pressure, and thus can protect the electrical mechanism 11 during operation.

The circuit board 111 had better to be a flexible printed circuit board 111, which is helpful to reduce the overall thickness of the electrical mechanism 11. As such, in a case where the thickness of the fingerprint identification module does not change, the gap 13 in the bottom of the electrical mechanism 11 may be designed to be bigger.

### Embodiment II

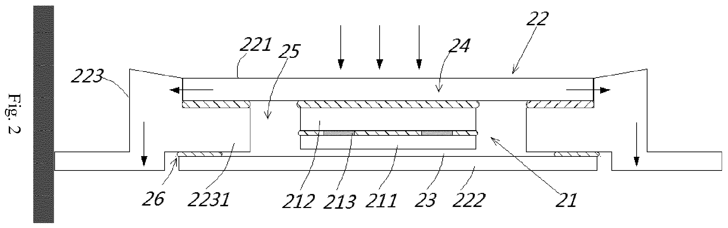

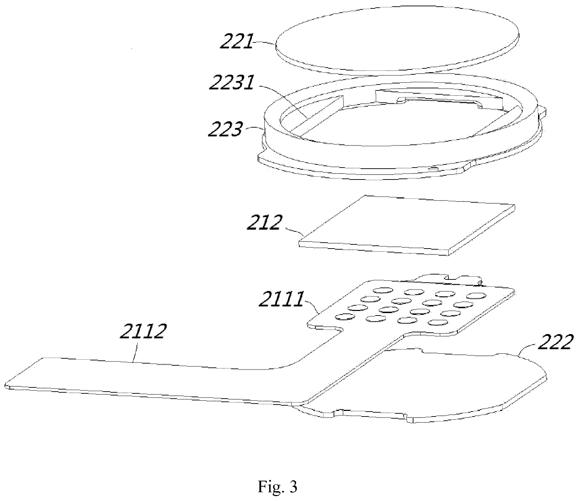

Figs. 2 and 3 show a fingerprint identification module employing a TSV (Through Silicon Via) encapsulation technology. The TSV encapsulation technology is a prior art, which will not be described here. The fingerprint identification module includes: an electrical mechanism 21 and a mechanics mechanism 22 provided on the periphery of the electrical mechanism 21 that is configured to disperse a pressure loaded on the electrical mechanism 21.

The mechanics mechanism 22 includes an upper cover plate 221, a lower cover plate 222 and a force transmission component 223 with a hollowed-out middle portion. An inner wall of the hollowed-out middle portion of the force transmission component 223 is provided with a support arm 2231. The support arm 2231 forms a step with a top end face and a bottom end face of the force transmission component 223 respectively and divides the accommodation space into a first accommodation portion 24 closer to the top end face of the force transmission component 223 relative to the support arm 2231, a third accommodation portion 26 closer to the bottom end face of the force transmission component 223 relative to the support arm 2231 and a second accommodation portion 25 located between the first accommodation portion 24 and the third accommodation portion 26. The upper cover plate 221 is provided in the first accommodation portion 24. The lower cover plate 222 is provided in the third accommodation portion 26. The fingerprint identification chip 212 and the connection portion 2111 are provided in the second accommodation portion 25. The upper cover plate 221 and the lower cover plate 222 enclose the second accommodation portion 25.

A bottom end face of the upper cover plate 221 is fixedly connected to an upper surface of the support arm 2231. A top end face of the lower cover plate 222 is fixedly connected to a lower surface of the support arm 2231.

The lower cover plate 222 added in this embodiment relative to embodiment I may prevent reverse stress (stress from the lower side upwards) damaging the electrical mechanism 21.

The electrical mechanism 21 includes a circuit board 211 and a fingerprint identification chip 212. The fingerprint identification chip 212 is used for collecting a fingerprint image signal of a user. The circuit board 211 includes an extension portion 2112 and a connection portion 2111 provided in the second accommodation portion 25. The fingerprint identification chip 212 is provided in the second accommodation portion 25. A signal output pad thereof is located on the back surface and is electrically connected to a signal input pad on the front surface of the connection portion 2111 through a solder 213.

Atop end face of the fingerprint identification chip 212 is fixedly connected to the bottom end face of the upper cover plate 221 through glue. During operation, the stress applied by the pressing of a finger of a user is dispersed and guided to various parts of the fingerprint identification module through the mechanics mechanism 22, and thus the electrical mechanism 21 merely supports a very small pressure, which can reduce the mechanical damage possibility of the electrical mechanism 21. At the same time, the smaller a pressure loaded on the electrical mechanism 21, the smaller the deformation thereof during operation; and the solder 213 between the fingerprint identification chip 212 and the connection portion 2111 is not easy to fall off.

A gap 23 is reserved between the connection portion 2111 and the lower cover plate 222. The gap 23 provides elastic deformation margin for the electrical mechanism 21, prevents the electrical mechanism 21 touching other components after the electrical mechanism is deformed by pressure, and thus can protect the electrical mechanism 21 during operation.

Preferably, neither the fingerprint identification chip 212 nor the connection portion 2111 contacts the inner wall of the hollowed-out middle portion in the force transmission component 223.

The circuit board 211 had better to be a flexible printed circuit board 211, which is helpful to reduce the overall thickness of the electrical mechanism 21. As such, in a case where the thickness of the fingerprint identification module does not change, the gap in the bottom of the electrical mechanism 21 may be designed to be bigger.

### Embodiment III

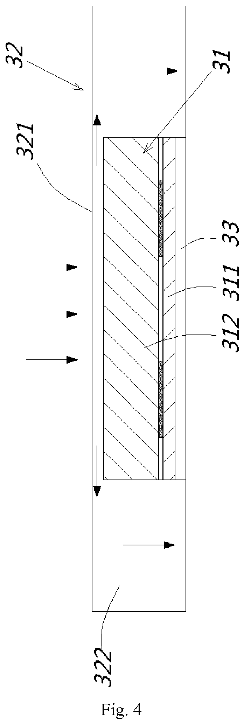

Fig. 4 shows a fingerprint identification module employing a plastic encapsulation technology. The plastic encapsulation technology is a prior art, which will not be described here. The fingerprint identification module includes: an electrical mechanism 31 and a mechanics mechanism 32 provided on the periphery of the electrical mechanism 31 that is configured to disperse a pressure loaded on the electrical mechanism 31.

Being different from the fingerprint identification module provided in embodiments I and II, the mechanics mechanism 32 in this embodiment is manufactured using a plastic encapsulation technology, and an upper cover plate 321 in the mechanics mechanism 32 is integral with a force transmission component 322.

The electrical mechanism 31 includes a circuit board 311 and a fingerprint identification chip 312 provided on the circuit board 311. The fingerprint identification chip 312 is used to collect a fingerprint image signal of a user.

The fingerprint identification chip and the connection portion may contact an inner wall of the hollowed-out middle portion in the force transmission component and may not contact the inner wall of the hollowed-out middle portion in the force transmission component, which is not limited in this embodiment.

The connection relationship between the components in the electrical mechanism 31 and the connection relationship between the electrical mechanism 31 and the mechanics mechanism 32 are identical to those in embodiments I and II. During manufacturing, it is ensured that a gap 33 is reserved in the bottom of the electrical mechanism 31, as long as it can be suspended in the accommodation space formed by the mechanics mechanism 32.

### Embodiment IV

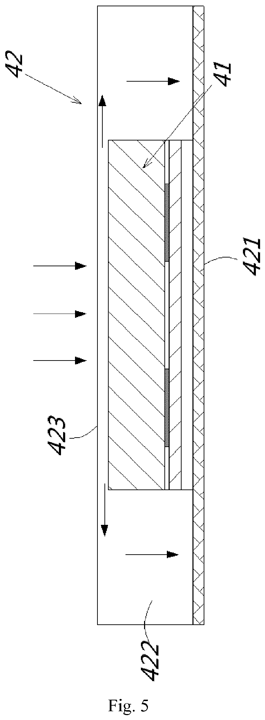

Fig. 5 shows a fingerprint identification module using a plastic encapsulation technology. Being different from the fingerprint identification module provided in embodiment III, the mechanics mechanism 42 in this embodiment further includes a lower cover plate 421. A top end face of the lower cover plate 421 is fixedly connected to a lower surface of a force transmission component 422 through glue, enclosing the accommodation space.

The lower cover plate 421 added in this embodiment relative to embodiment IV may prevent reverse stress (stress from the lower side upwards) damaging the electrical mechanism 41.

### Embodiment V

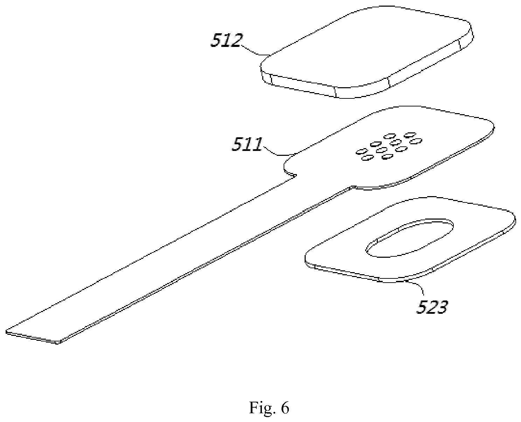

Referring to Figs. 6-9, the fingerprint identification module in this embodiment is also manufactured using a plastic encapsulation technology. Being different from embodiments I, II, III and IV, a reinforcement plate 523 is provided below the connection portion of the circuit board in this embodiment as a reinforcement structure of the circuit board 511. The location in the middle portion of the reinforcement plate 523 corresponding to a solder 513 on the back surface of the fingerprint identification chip 512 is hollowed-out for ensuring that a gap is reserved in the bottom of the electrical mechanism which is electrically connected.

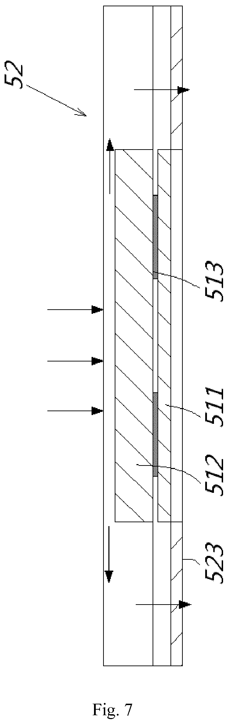

Referring to Figs. 7-9, the circuit board 511 may not go beyond the accommodation space where the fingerprint identification chip 512 is located, and may not go beyond the accommodation space where the fingerprint identification chip 512 is located and extend into an mechanics mechanism 52. The portions of the circuit board 511 extending into the mechanics mechanism 52 may bear the stress caused by the transmission of a pressure in the mechanics mechanism 52. The above-described structure may be adjusted flexibly according to the size of the circuit board 511, which is not limited in this embodiment.

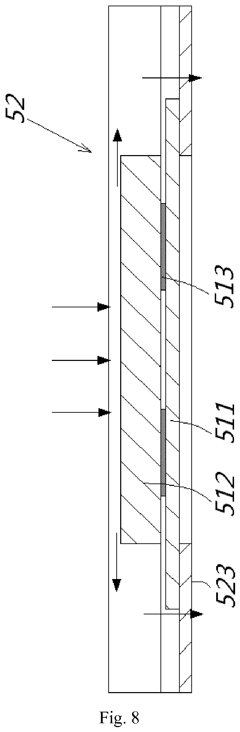

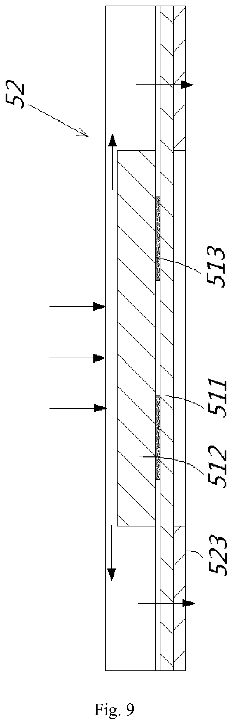

It should be noted that in Figs. 8 and 9, although the circuit board 511 extends into the mechanics mechanism 52 and bears pressure, since this portion of the circuit board 511 is not electrically connected to the fingerprint identification chip 512 (without the provision of a pad), the solder 513 between the fingerprint identification chip 512 and the circuit board 511 will not fall off even that portion is under pressure.

### Embodiment VI

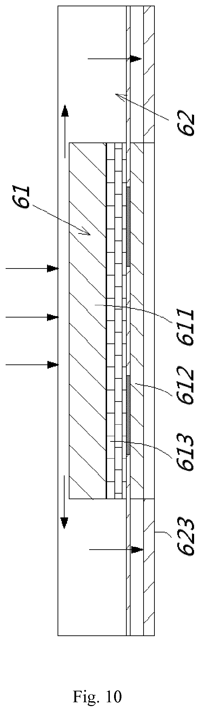

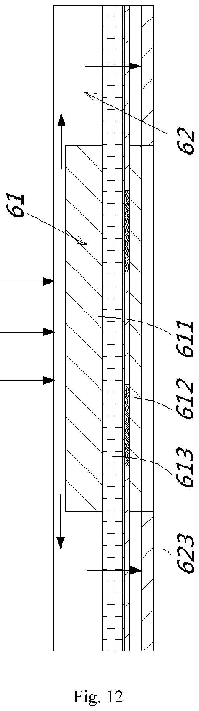

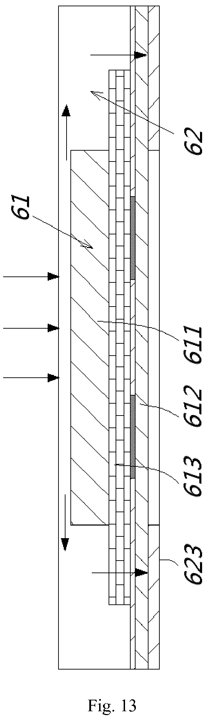

Referring to Figs. 10-13, the fingerprint identification module in this embodiment is also manufactured using a plastic encapsulation technology. Being different from embodiments I, II, III and IV, a reinforcement plate 623 is provided below a connection portion of a circuit board 612 in this embodiment. An electrical mechanism 61 also includes a base plate 613. The base plate 613 is provided between the fingerprint identification chip 611 and the connection portion of the circuit board 612 as an electrical connection component.

The circuit board 612 and the base plate 613 may not go beyond the accommodation space where the fingerprint identification chip is located, and may go beyond the accommodation space where the fingerprint identification chip 611 is located and extend into an mechanics mechanism 62. The portions of the circuit board 612 and the base plate 613 extending into the mechanics mechanism 62 may bear the stress caused by the transmission of a pressure in the mechanics mechanism 62. The above-described structure may be adjusted flexibly according to the size of the circuit board 612 and the base plate 613, which is not limited in this embodiment.

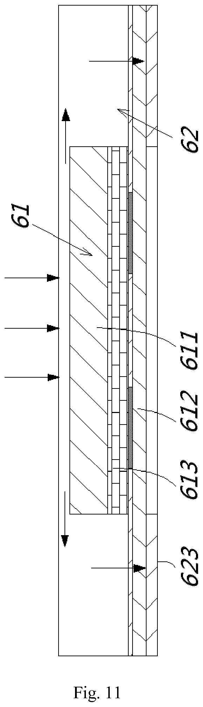

It should be noted that in Figs. 11-13, although the circuit board 612 and/or the base plate 613 extends into the mechanics mechanism 52 and bears pressure, since this portion of the circuit board 612 and/or the base plate 613 is not electrically connected to the fingerprint identification chip 611 (without the provision of a pad), the solders among the fingerprint identification chip 611 and the circuit board 612 and the base plate 613 will not fall off even that portion is under pressure.

For those skilled in the art, obviously, the present invention is not limited to the details of the above-described exemplary embodiments and the present invention may be embodied in other particular forms without departing from the spirit or basic features of the present invention. Therefore, the embodiments shall be regarded as exemplary and non-restrictive, and the scope of the present invention is defined by the appended claims rather than the above discussed description, and thus all changes in the meaning and range of equivalents falling into the claims shall be covered in the present invention. The reference numerals in the claims shall not be regarded as limiting the involved claims.

Herein, it should be understood that although the description is described with embodiments, not every embodiment merely includes one independent technical solution. This narration of the description is merely for the sake of clarity, those skilled in the art shall regard the description as a whole, and the technical solutions in the embodiments may be combined suitably to form other embodiments which can be understood by those skilled in the art.

## Claims

1. A fingerprint identification module, comprising:
an electrical mechanism and a mechanics mechanism provided on the periphery of the electrical mechanism that is configured to disperse a pressure loaded on the electrical mechanism, wherein the mechanics mechanism includes an upper cover plate and a force transmission component with a hollowed-out middle portion, the upper cover plate being provided on the top of the force transmission component and forming an accommodation space together with the force transmission component; and
the electrical mechanism includes a circuit board and a fingerprint identification chip, the circuit board including an extension portion and a connection portion, the fingerprint identification chip being provided in the accommodation space and being electrically connected to the connection portion via a conductor, a top end face of the fingerprint identification chip being fixedly connected to a bottom end face of the upper cover plate, and the horizontal height of a bottom end face of the connection portion being higher than that of a bottom end face of the mechanics mechanism.

2. The fingerprint identification module according to claim 1, wherein an inner wall of the hollowed-out middle portion of the force transmission component is provided with a support arm, the support arm forms a step with a top end face of the force transmission component and divides the accommodation space into a first accommodation portion close to the top end face of the force transmission component and a second accommodation portion close to the bottom end face of the force transmission component, the upper cover plate is provided in the first accommodation portion, the fingerprint identification chip and the connection portion are provided in the second accommodation portion, and the bottom end face of the upper cover plate is fixedly connected to an upper surface of the support arm.

3. The fingerprint identification module according to claim 1, wherein the accommodation space is provided with an opening on the bottom, an inner wall of the hollowed-out middle portion of the force transmission component is provided with a support arm, the mechanics mechanism also includes a lower cover plate, the bottom end face of the upper cover plate is fixedly connected to an upper surface of the support arm, a top end face of the lower cover plate is fixedly connected to a lower surface of the support arm, and a gap is reserved between the connection portion and the lower cover plate.

4. The fingerprint identification module according to claim 3, wherein the support arm forms a step with the top end face and the bottom end face of the force transmission component respectively and divides the accommodation space into a first accommodation portion closer to the top end face of the force transmission component relative to the support arm, a third accommodation portion closer to the bottom end face of the force transmission component relative to the support arm and a second accommodation portion located between the first accommodation portion and the third accommodation portion, the upper cover plate is provided in the first accommodation portion, the lower cover plate is provided in the third accommodation portion, the fingerprint identification chip and the connection portion are provided in the second accommodation portion, and the upper cover plate and the lower cover plate enclose the second accommodation portion.

5. The fingerprint identification module according to claim 1, wherein the upper cover plate and the force transmission component are of an integral structure.

6. The fingerprint identification module according to claim 5, wherein the mechanics mechanism also includes a lower cover plate, a top end face of the lower cover plate is fixedly connected to the bottom end face of the mechanics mechanism, and the lower cover plate encloses the accommodation space.

7. The fingerprint identification module according to claim 5, wherein the mechanics mechanism also includes a reinforcement plate, the reinforcement plate is provided below the circuit board and with a hollowed-out middle portion, and the hollowed-out location corresponds to the location of the conductor on the back surface of the fingerprint identification chip.

8. The fingerprint identification module according to claim 7, wherein the mechanics mechanism also includes a base plate, and the base plate is provided between the fingerprint identification chip and the connection portion.

9. The fingerprint identification module according to claim 8, wherein an edge of the base plate extends into the mechanics mechanism.

10. The fingerprint identification module according to claim 7, wherein an edge of the connection portion of the circuit board extends into the mechanics mechanism.
